(19)

**Europäisches Patentamt**
**European Patent Office**
**Office européen des brevets**

(11) **EP 4 648 379 A1**

(12) **EUROPEAN PATENT APPLICATION**
published in accordance with Art. 153(4) EPC

(43) Date of publication:
**12.11.2025 Bulletin 2025/46**

(21) Application number: **24759546.5**

(22) Date of filing: **05.02.2024**

(51) International Patent Classification (IPC):
***H04L 45/02*** *(2022.01)*

(52) Cooperative Patent Classification (CPC):
**H04L 45/00; H04L 45/02; H04L 45/036; H04L 45/74**

(86) International application number:
**PCT/CN2024/076050**

(87) International publication number:
**WO 2024/174869 (29.08.2024 Gazette 2024/35)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **21.02.2023 CN 202310184975**

(71) Applicant: **Huawei Technologies Co., Ltd.**
**Shenzhen, Guangdong 518129 (CN)**

(72) Inventors:
• **XU, Shu**
**Shenzhen, Guangdong 518129 (CN)**
• **LEE, Choonmeng**
**Shenzhen, Guangdong 518129 (CN)**
• **PAVEL, Mosharev**
**Shenzhen, Guangdong 518129 (CN)**
• **ZHANG, Xiaoshan**
**Shenzhen, Guangdong 518129 (CN)**
• **YUNG, Manhong**
**Shenzhen, Guangdong 518129 (CN)**
• **XU, Huiying**
**Shenzhen, Guangdong 518129 (CN)**

(74) Representative: **Maiwald GmbH**
**Engineering**
**Elisenhof**
**Elisenstrasse 3**
**80335 München (DE)**

(54) **SHARED RISK LINK GROUP-DISJOINT SOLVING METHOD, ELECTRONIC DEVICE AND COMPUTER STORAGE MEDIUM**

(57)    A method for solving shared risk path group disjointness is provided, and includes: obtaining information about a link from a source node to a destination node in a communication network topology, where the information about the link includes constraint information and a loss value of each path from the source node to the destination node, loss information includes a physical loss and economic costs, and the constraint information includes one or more specified constraint factors; estimating a value of a loss upper bound of a working path; determining K paths having loss values less than the value of the loss upper bound in a search space, where the search space includes N paths from the source node to the destination node, and K<N; searching the K paths to determine M paths that meet the constraint information, where M<K; and searching the M paths to determine a working path and a protection path that meet a requirement. Using the method in this application to perform path navigation can provide a quick and high-quality SRLG-disjoint path solution, and achieves value such as quick cross-domain provision, maximum network utilization, and flexible service scheduling.

FIG. 5

## Description

This application claims priority to Chinese Patent Application No. 202310184975.3, filed with the China National Intellectual Property Administration on February 21, 2023, and entitled "METHOD FOR SOLVING SHARED RISK LINK GROUP DISJOINTNESS, ELECTRONIC DEVICE, AND COMPUTER STORAGE MEDIUM", which is incorporated herein by reference in its entirety.

## TECHNICAL FIELD

This application relates to the communication field, and in particular, to a method for solving shared risk link group (shared risk link group, SRLG) disjointness, an electronic device, and a computer storage medium.

## BACKGROUND

The development of network technologies, such as 5G and slicing, and cloud services, has led to increasingly strict requirements of high-bandwidth and delay-sensitive service application on a network. Currently, most network topologies are manually planned statically and implemented device by device. However, new changes may occur on the network during service implementation, leading to situations such as possible inconsistency between service traffic and manual planning, and load imbalance. Operation and maintenance personnel cannot perceive instantaneous changes in network traffic conditions in real time and cannot maintain or adjust a network structure in a timely manner. This directly affects customer service experience and causes numerous customer complaints.

## SUMMARY

Embodiments of this application provide a method for solving shared risk link group disjointness, an electronic device, and a computer storage medium, to implement SRLG disjointness and other constraints.

According to a first aspect, an embodiment of this application provides a method for solving shared risk path group disjointness. The method includes: obtaining information about a link from a source node to a destination node in a communication network topology, where the information about the link includes constraint information and a loss value of each path from the source node and the destination node, the loss value includes a physical loss and economic costs; the constraint information includes one or more specified constraint factors; estimating a value of a loss upper bound of a working path; determining K paths having loss values less than the value of the loss upper bound in a search space, where the search space includes N paths from the source node to the destination node, and K<N; searching the K paths to determine M paths that meet the constraint information, where M<K, and K, N, and M are positive integers; and searching the M paths to determine a working path and a protection path that meet a requirement, where the protection path and the working path meet a characteristic of shared risk path group disjointness. In this way, a loss value of the WP is pre-estimated based on losses and delays of edges in a graph, and the search space is pruned efficiently by using the pre-estimated value. In a millisecond level, a traffic direction needs to be predicted based on different constraints, to solve an SRLG-disjoint routing problem corresponding to complex large-scale networking.

In a possible implementation, the search space is traversed in depth first, where the depth first means that all nodes and edges in one of the N paths are first searched for in a parent-child node order, and then another path is searched for. In this way, when a node is traversed in a depth-first search mode, if a loss or a delay of the path does not meet specified conditions, an entire subtree is removed from the search space, and child nodes of the subtree do not need to be explored. In comparison with another graph traversal mode, for example, a breadth-first search and a hierarchical search, the depth-first search requires less storage space.

In a possible implementation, determining the K paths having the loss values less than the value of the loss upper bound in the search space includes: traversing N paths from the source node to the destination node; during traversal, accumulating, one by one, loss values of all edges in a current path, and when an accumulated value is greater than the value of the loss upper bound, removing the current path from the search space, to obtain the K paths having the loss values less than or equal to the value of the loss upper bound. In this way, pruning may be performed based on a loss requirement. If a loss of the path does not meet the specified conditions, the entire subtree is removed from the search space, to narrow a search traversal range.

In a possible implementation, searching the K paths to determine the working path that meets one or more constraints includes: increasing the value of the loss upper bound when the working path that meets the one or more constraints fails to be found from the K paths; determining L paths having loss values less than or equal to the increased value of the loss upper bound in the search space, where the L paths do not include the K paths; and searching the L paths to determine the working path that meets the one or more constraints. In this way, the estimated value of the loss upper bound does not need to be accurate. If a path that meets the constraint information is not found in a round of search, the pre-estimated value of the loss upper bound may be increased, and a new round of search is started.

In a possible implementation, estimating the value of the loss upper bound $\text{Cost}_{max}$ includes: calculating the value of the loss upper bound $\text{Cost}_{max}$ by using the following formula: $\text{Cost}_{max} = \alpha d_{min} \dfrac{minC}{minD}$, where $\alpha$

is an adjustable coefficient, $d_{min}$ is a lower bound of a delay constraint, minC is a minimum loss of a path from the source node to the destination node, and minD is minimum delay time of a path from the source node to the destination node. In this way, the value of the loss upper bound can be appropriately estimated based on delay and loss information of a communication network.

In a possible implementation, the value of the loss upper bound is increased by increasing a value of the adjustable coefficient $\alpha$. In this way, the value of the loss upper bound can be increased.

In a possible implementation, the one or more constraints include a path delay time range constraint. In this way, pruning may be performed based on a delay time range, to narrow a search traversal range.

In a possible implementation, the working path is a path with a smallest loss in a plurality of paths that meet the one or more constraints. In this way, a lowest-cost working path can be found to meet customer requirements.

In a possible implementation, searching the M paths to determine the working path and the protection path that meet the requirement includes: removing, from the M paths, an SRLG corresponding to the WP, and searching the remaining search space for the protection path that meets the constraint. In this way, all edges involved in the SRLG group corresponding to the WP may be pruned, to further narrow a traversal range for searching for the protection path.

In a possible implementation, searching the M paths to determine the working path and the protection path that meet the requirement includes: when one working path is found but a corresponding protection path cannot be found, determining one or more continuous loss intervals based on a loss of the working path; and determining, based on search in a search space corresponding to the one or more continuous loss intervals, the working path and the protection path that meet the requirement. In this way, based on a function relationship between losses and delay time of edges in a topology graph structure, the protection path can be quickly determined through a continuous interval search, so that various constraints can be supported, to solve a trap problem in the SRLG disjointness problem.

In a possible implementation, searching the M paths to determine the working path and the protection path that meet the requirement includes: when one working path is found but a corresponding protection path cannot be found, determining one or more spaced loss intervals based on a loss of the working path; and determining, based on search in a search space corresponding to the one or more spaced loss intervals, the working path and the protection path that meet the requirement. In this way, on the basis that losses and delay time of edges in a topology graph structure are not correlated, the protection path may be quickly determined through a jump interval search, so that various constraints can be supported, to solve a trap problem in the SRLG disjointness problem.

In a possible implementation, the protection path and the working path meet a disjoint constraint of a delay time difference. In this way, a protection path that is most consistent with the working path in delay time can be found, and customer requirements can be met.

According to a second aspect, an embodiment of this application provides an electronic device, including: at least one memory, configured to store a program; and at least one processor, configured to execute the program stored in the memory. When the program stored in the memory is executed, the processor is configured to perform the method according to any one of the first aspect or the implementations of the first aspect. A beneficial effect of the second aspect is the same as that in the first aspect. Details are not described herein again.

According to a third aspect, an embodiment of this application provides a computer storage medium. The computer storage medium stores instructions. When the instructions are run on a computer, the computer is enabled to perform the method according to any one of the first aspect or the implementations of the first aspect.

According to a fourth aspect, an embodiment of this application provides an apparatus for solving shared risk path group disjointness, including: an information obtaining module, configured to obtain information about a link from a source node to a destination node in a communication network topology, where the information about the link includes constraint information and a loss value of each path from the source node to the destination node, the loss value includes a physical loss and economic costs, and the constraint information includes one or more specified constraint factors; a loss pre-estimation module, configured to estimate a value of a loss upper bound of a working path; a loss pruning module, configured to determine K paths having loss values less than the value of the loss upper bound in a search space, where the search space includes N paths from the source node to the destination node, and K<N; a constraint pruning module, configured to search through K paths to determine M paths that meet the constraint information, where M<K, and K, N, and M are positive integers; and a disjoint path determining module, configured to search the M paths to determine a working path and a protection path that meet a requirement, where the protection path and the working path meet a characteristic of shared risk path group disjointness. In this way, in this application, a loss value of the working path is pre-estimated based on losses and delays of edges in a graph, and the search space is pruned efficiently by using the pre-estimated value. In a millisecond level, a traffic direction needs to be predicted based on different constraints, to solve an SRLG-disjoint routing problem corresponding to complex large-scale networking.

## BRIEF DESCRIPTION OF DRAWINGS

To describe technical solutions in a plurality of embodiments disclosed in the specification more clearly, the following briefly describes the accompanying drawings used in describing embodiments. It is clear that the accompanying drawings in the following descriptions show merely the plurality of embodiments disclosed in the specification, and a person of ordinary skill in the art can still derive other drawings from these accompanying drawings without creative efforts.

The following briefly describes the accompanying drawings used in describing the embodiments or a conventional technology.

FIG. 1 is a schematic of an optical path topology graph of a network;

FIG. 2 is a diagram of an underlying physical structure corresponding to the optical path topology graph shown in FIG. 1;

FIG. 3 is a flowchart of solving SRLG disjointness by using a KSP algorithm according to a first technical solution;

FIG. 4 is a flowchart of a TA algorithm according to a second technical solution;

FIG. 5 is a diagram of an application scenario of a method for solving shared risk path group disjointness according to an embodiment of this application;

FIG. 6 is a flowchart of a method for solving shared risk path group disjointness according to an embodiment of this application;

FIG. 7 is a diagram of depth-first search traversal according to an embodiment of this application;

FIG. 8 is a distribution diagram of all path losses in a search space according to an embodiment of this application;

FIG. 9 is a flowchart of determining a working path and a protection path according to an embodiment of this application;

FIG. 10 is a flowchart of determining a protection path based on an interval search according to an embodiment of this application;

FIG. 11 is a conceptual diagram of an interval search;

FIG. 12 is a diagram of an interval search according to Embodiment 2 of this application;

FIG. 13 is a diagram of an apparatus for solving shared risk path group disjointness according to an embodiment of this application; and

FIG. 14 is a diagram of an electronic device according to an embodiment of this application.

## DESCRIPTION OF EMBODIMENTS

To make objectives, technical solutions, and advantages of embodiments of this application clearer, the following describes the technical solutions in embodiments of this application with reference to the accompanying drawings.

In descriptions of embodiments in this application, the term such as "example", "for example", or "in an example" is used to represent giving an example, an illustration, or a description. Any embodiment or design scheme described as "an example", "for example", or "in an example" in embodiments of this application should not be explained as being more preferred or having more advantages than another embodiment or design scheme. Specifically, use of the terms such as "example", "for example", or "in an example" is intended to present a related concept in a specific manner.

In the descriptions of embodiments of this application, the term "and/or" describes only an association relationship between associated objects and indicates that three relationships may exist. For example, A and/or B may indicate the following three cases: Only A exists, only B exists, and both A and B exist. In addition, unless otherwise specified, the term "a plurality of" means two or more. For example, a plurality of systems mean two or more systems, and a plurality of terminals mean two or more terminals.

In addition, the terms "first" and "second" are used merely for a purpose of description, and shall not be understood as an indication or implication of relative importance or an implicit indication of an indicated technical feature. Therefore, a feature limited by "first" or "second" may explicitly or implicitly include one or more of the features. The terms "include", "have", and their variants all mean "include but are not limited to", unless otherwise specifically emphasized in another manner.

In the descriptions of embodiments of this application, the term "some embodiments" describes subsets of all possible embodiments, but it may be understood that "some embodiments" may be the same subsets or different subsets of all possible embodiments, and may be combined with each other without a conflict.

In the descriptions of embodiments of this application, the terms "first, second, third, or the like", or a module A, a module B, a module C, or the like are merely used to distinguish between similar objects, and do not represent a specific order of the objects. It may be understood that a specific order or priority may be interchanged if allowed, so that embodiments of this application described herein may be implemented in an order other than the order illustrated or described herein.

In the descriptions of embodiments of this application, reference numerals of steps, for example, S110, S120, or the like, do not necessarily indicate that the steps are performed in this order. If allowed, an order of the steps may be changed, or the steps may be performed at the same time.

Unless otherwise specified, all technical and scientific terms used in this specification have same meanings as those usually understood by a person skilled in the art of this application. The terms used in this specification are merely intended to describe objectives of embodiments of this application, and are not intended to limit this application.

In a communication network, a network topology is usually described by using a graph (graph) structure. A user and a communication relay are described as nodes (nodes) in a graph, and a communication link between the user and the communication relay is described as an edge (edge) in the graph. Communication links corresponding to different edges in the topology may share some same physical resources. For example, links corresponding to two different edges pass through a same optical cable. In this case, if the optical cable is damaged, the two different edges are both disconnected in the topology. Therefore, one group of links that share same physical resources is referred to as a shared risk link group (shared risk link group, SRLG).

Assuming that there are a plurality of paths and edges forming the paths do not pass through any same SRLG, these links are referred to as paths that meet SRLG disjointness.

A purpose of a routing technology is to find a communication path from a source node (source) to a destination node (destination). Reliability and flexibility need to be ensured for communication between the source node and the destination node. Reliability means that when a communication path between the source node and the destination node is interrupted for some reasons, another available communication path may be switched to for communication. Flexibility means that it needs to be ensured that the communication path from the source node to the destination node meets a series of constraint factors specified by a customer.

To ensure reliability, in an actual application scenario, in addition to a working path (working path, WP) from the source node to the destination node, a protection path (protection path, PP) that meets a characteristic of SRLG disjointness with the WP needs to be found. When communication cannot be performed on the WP for some reasons, a PP is switched to for communication.

To ensure flexibility, a series of constraints needs to be met between the WP and the PP, or by the WP and the PP. For example, delay time of the WP needs to fall within a specific allowed range, and a delay time difference between the WP and the PP cannot exceed a specific threshold.

In a specific application scenario, communication from the source node to the destination node mainly occurs on the WP. Therefore, to solve an SRLG disjointness problem, fees/losses/costs (costs) corresponding to the WP need to be as low as possible. The costs of the WP include a sum of an optical fiber loss, physical consumption (for example, power consumption), and a usage fee for each optical fiber of the path.

Therefore, in a communication network, an urgent problem to be solved is how to search for a WP from a source node to a destination node and a PP from the source node to the destination node, requiring the WP and the PP to meet SRLG disjointness and another constraint, and costs of the WP to be as low as possible.

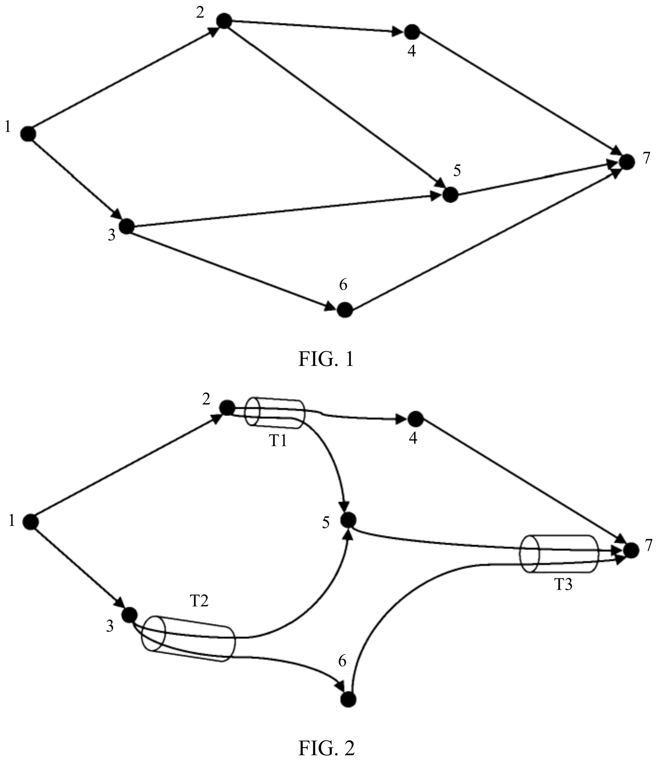

FIG. 1 is a schematic of an optical path topology graph of a network. As shown in FIG. 1, the optical path topology of the network has four optical fiber paths: a path

$1{\rightarrow}2{\rightarrow}4{\rightarrow}7$, a path $1{\rightarrow}2{\rightarrow}5{\rightarrow}7$, a path $1{\rightarrow}3{\rightarrow}5{\rightarrow}7$, and a path $1{\rightarrow}3{\rightarrow}6{\rightarrow}7$. It can be learned that the path $1{\rightarrow}2{\rightarrow}5{\rightarrow}7$ and the path $1{\rightarrow}3{\rightarrow}6{\rightarrow}7$ do not pass through a same node or a same edge other than a source node and a destination node, so that the path $1{\rightarrow}2{\rightarrow}5{\rightarrow}7$ is disjoint from the path $1{\rightarrow}3{\rightarrow}6{\rightarrow}7$. Similarly, the path $1{\rightarrow}2{\rightarrow}4{\rightarrow}7$ is disjoint from the path $1{\rightarrow}3{\rightarrow}6{\rightarrow}7$, and the path $1{\rightarrow}2{\rightarrow}4{\rightarrow}7$ is disjoint from the path $1{\rightarrow}3{\rightarrow}5{\rightarrow}7$.

FIG. 2 is a diagram of an underlying physical structure corresponding to the optical path topology graph shown in FIG. 1. As shown in FIG. 2, T1, T2, and T3 are three optical fiber pipes. If one of the pipes is damaged, optical fibers in the pipe fail simultaneously. As a result, related edges in the optical path topology graph are invalid. In the path $1{\rightarrow}2{\rightarrow}5{\rightarrow}7$ and the path $1{\rightarrow}3{\rightarrow}6{\rightarrow}7$, both edges $5{\rightarrow}7$ and $6{\rightarrow}7$ pass through the pipe T3. When a fault occurs on the pipe T3, the two paths fail simultaneously. Therefore, the path $1{\rightarrow}2{\rightarrow}5{\rightarrow}7$ is not SRLG-disjoint from the path $1{\rightarrow}3{\rightarrow}6{\rightarrow}7$.

Currently, there may be two technical solutions for solving an SRLG disjointness problem. One is an algorithm for obtaining an optimal solution, including an integer linear programming (ILP) algorithm and a K-shortest path (KSP) algorithm. The other is a heuristic algorithm, including: a trap avoidance (TA) algorithm, a conflict link exclusion (COLE) algorithm, and a conflicting shared risk link group exclusion (COSE) algorithm.

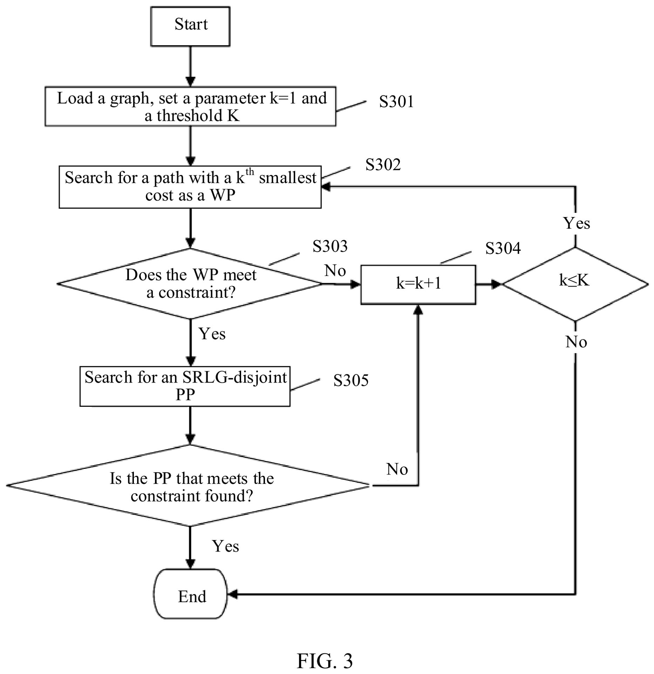

FIG. 3 is a flowchart of solving SRLG disjointness by using a KSP algorithm according to a first technical solution. As shown in FIG. 3, solving an SRLG-disjoint link by using the KSP algorithm includes the following steps.

S301: Load an optical path topology graph from a source node to a destination node, and set a parameter k=1 and a threshold K, where K is a positive integer greater than 1.

S302: Determine a path with a $k^{th}$ smallest loss cost value based on a plurality of paths from the source node to the destination node. Herein, a cost value is a sum of cost values of all edges in a path. There are one or more paths with the $k^{th}$ smallest cost value. In this case, only one of the paths needs to be selected.

S303: Determine whether the path with the $k^{th}$ smallest cost value meets a constraint of a WP. If the constraint of the WP is not met, S304 is performed. If the constraint of the WP is met, S305 is performed. Herein, the constraint of the WP means that a sum of delays of all edges in a path is less than a specified threshold.

S304: Query each path in the optical path topology graph of a network, and search for a path with a $(k+1)^{th}$ smallest cost value until a WP that meets a constraint is found; or when k reaches the threshold K, stop the algorithm.

Specifically, each edge in the WP with the $k^{th}$ smallest cost is sequentially removed from the graph, and a WP with a lowest cost in a new graph structure obtained by removing the edge is found as the WP with the $(k+1)^{th}$ smallest cost.

S305: Search for a PP that meets an SRLG constraint. If the PP that meets the constraint is found, an optimal WP and a corresponding PP are found. In this case, the algorithm stops.

A step of searching for the PP that meets the SRLG constraint includes removing all edges involved in an SRLG group corresponding to the WP in the optical path topology graph to obtain a new graph, and searching for the PP that meets the constraint. There may be more than one PP that meets the constraint. In this case, only one PP needs to be found.

Otherwise, if the PP that meets the constraint is not found, S304 and S305 are performed again.

In the KSP algorithm, when the corresponding PP cannot be found for the WP with the $k^{th}$ smallest cost value, the WP with the $(k+1)^{th}$ smallest cost value needs to be determined based on the current WP. In this step, a plurality of new graphs are obtained by sequentially removing each edge in the WP with the $k^{th}$ smallest cost value from the optical path topology graph, where a number of the new graphs is equal to a number of edges included in the WP, and a WP with a smallest cost value is sequentially searched for in each new graph structure obtained by removing an edge. Because the new graphs need to be solved, the KSP algorithm requires much time to solve the SRLG disjointness problem. The solution process is very time-consuming.

The SRLG disjointness problem is an NP-hard problem. The KSP algorithm requires excessively long running time for a large-scale communication network. This is unacceptable during actual application.

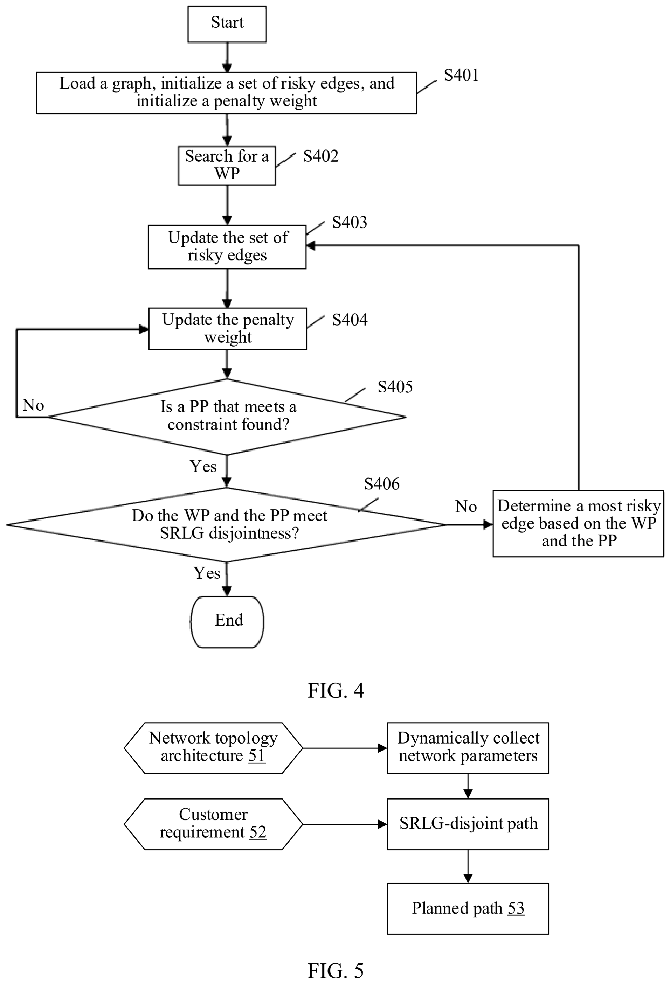

FIG. 4 is a flowchart of a TA algorithm according to a second technical solution. As shown in FIG. 4, the TA algorithm is a heuristic algorithm, and the TA algorithm is used to solve an SRLG-disjoint path, including the following steps:

S401: Load an optical path topology graph from a source node to a destination node, and initialize various parameters, including: setting a set of risky edges to an empty set, and setting initial penalty weights of all edges to 0. The risky edges are edges for which it is highly probable that no PP is found.

The set of risky edges may be set to the empty set by setting an initial value of a number of the risky edges to 0. A purpose of setting the penalty weights is to preferentially select an edge with a small penalty weight.

S402: Search for a WP that meets a constraint.

The constraint of the WP includes but is not limited to the following: Delay time of the WP needs to fall within a specific allowed range; and fees/losses/costs of the WP need to be as low as possible.

S403: Find the WP that meets the constraint, determine a risky edge in the WP, and update the set of risky edges.

If in an intuitive scenario, all edges in the WP that meets the constraint are risky edges, all the edges in the WP that meets the constraint are added to the set of risky edges.

S404: Update penalty weights of all edges in the optical path topology graph from the source node to the destination node based on the set of risky edges.

S405: After the set of risky edges and the penalty weights are updated, search for a PP in an updated graph, where the PP does not include any edge in the WP.

A delay time difference between the WP and the PP cannot exceed a threshold. When the found PP does not meet the constraint, the penalty weights continue to be updated, and S403 to S405 are performed until a PP that meets the constraint is found.

S406: Check whether the WP is SRLG-disjoint from the PP. If the WP is SRLG-disjoint from the PP, problem-solving ends. Otherwise, a set of most risky edges needs to be determined based on the WP and the PP, and step S403 is performed again to enter a next round of solving.

In the TA algorithm, a core idea is to determine a most risky edge. The most risky edge causes disjointness failure. When the WP and the PP do not meet an SRLG disjointness requirement, the most risky edge is an edge with a highest probability of causing a disjointness failure. If the most risky edge can be accurately found, it can be ensured that an optimal solution can be found for the SRLG disjointness problem.

However, the TA algorithm cannot be used to efficiently determine the set of most risky edges. Therefore, although execution time is shorter than that of a precise algorithm, for example, the KSP algorithm, in an actual application scenario, a requirement of a complex large-scale networking service cannot be met. In addition, a complex and variable constraint cannot be processed. With the complex constraint, a TA-related algorithm cannot be used to find a corresponding PP. Consequently, the most risky edges cannot be determined based on the WP and the PP, and the algorithm cannot proceed with execution.

Different from the foregoing two technical solutions, a method for solving shared risk path group disjointness provided in embodiments of this application is categorized as a routing algorithm, and has important application in path orchestration of an optical fiber tunnel.

FIG. 5 is a diagram of an application scenario of a method for solving shared risk path group disjointness according to an embodiment of this application. As shown in FIG. 5, in an optical fiber tunnel planning scenario of an automatic network management and control system (iMaster NCE), a traffic direction is predicted based on different constraints, a network topology architecture 51 is reconstructed, and network parameters such as a network delay and available traffic are dynamically collected. An SRLG-disjoint path is planned in combination with a customer requirement 52 and the network parameters, to obtain a planned path 53, where the planned path 53 includes a WP and a PP. The WP and the PP obtained in this way can meet differentiated service requirements of customers and support multi-factor combination constraints. Because all the network parameters are dynamically collected, an SRLG-disjoint WP and PP that adapt to a dynamic change of the entire network topology architecture 51 are searched for based on real-time network traffic conditions. Therefore, time for solving an SRLG-disjoint path in the method provided in this embodiment of this application can meet a millisecond-level requirement.

Using the method for solving shared risk path group disjointness provided in this embodiment of this application to perform path navigation can provide a quick and high-quality SRLG-disjoint path solution, and achieves value such as quick cross-domain provision, maximum network utilization, and flexible service scheduling for an operator.

Specific embodiments are used below to describe in detail the technical solutions of this application. The following several specific embodiments may be combined with each other, and a same or similar concept or process may not be described in detail again in some embodiments.

A method for solving shared risk path group disjointness provided in embodiments of this application includes: obtaining information about a link from a source node to a destination node in a communication network topology, where the information about the link includes constraint information and a loss value of each path from the source node and the destination node, the loss value includes a physical loss and economic costs; the constraint information includes one or more specified constraint factors; estimating a value of a loss upper bound of a working path; determining K paths having loss values less than the value of the loss upper bound in a search space, where the search space includes N paths from the source node to the destination node, and K<N; searching the K paths to determine M paths that meet the constraint information, where M<K, and K, N, and M are positive integers; and searching the M paths to determine a working path and a protection path that meet a requirement, where the protection path and the working path meet a characteristic of shared risk path group disjointness.

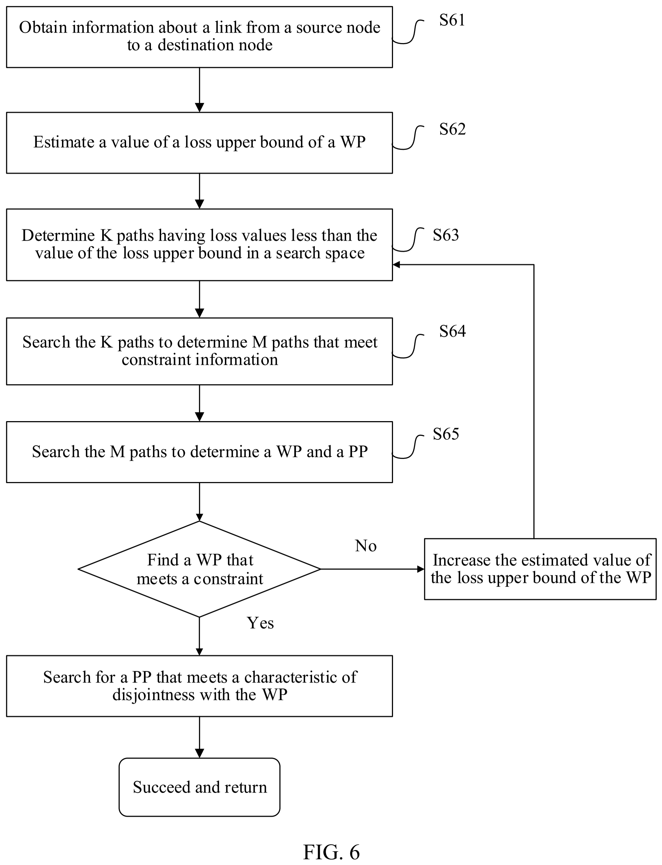

FIG. 6 is a flowchart of a method for solving shared risk path group disjointness according to an embodiment of this application. As shown in FIG. 6, a procedure of the method for solving shared risk path group disjointness is as follows:

S61: Obtain information about a link from a source node to a destination node in a communication network topology, where the information about the link includes constraint information and a loss value of each path from the source node to the destination node, the loss value includes a physical loss and economic costs, and the constraint information includes one or more specified constraint factors.

In the communication network topology, links corresponding to different edges enjoy some physical resources, for example, different optical fibers or cables. Consumption caused by using these physical resources, for example, optical fiber/cable depreciation and power consumption, is a physical loss. Fees paid for using these physical resources are economic costs, for example, rent for leasing a communication network or money spent for constructing a network integration.

The constraint information refers to one or more conditions that need to be met by a communication path from the source node to the destination node and that are specified by a customer, including a delay and a loss of a WP, a delay difference between the WP and a PP, and the like. The delay refers to a delay in transmitting information or a signal from the source node to the destination node.

A routing management system loads a topology graph from the source node to the destination node and network parameters of the topology graph, and obtains link information of each communication path from the source node to the destination node based on the network parameters of the topology graph. The link information includes constraint information and a loss value of each communication path. The topology graph may be an optical path topology graph, the loss value includes a physical loss and economic costs, and the constraint information includes one or more specified constraint factors.

S62: Estimate a value of a loss upper bound of a working path.

In an SRLG disjointness problem with a delay constraint, the pre-estimated value of the loss upper bound $Cost_{max}$ based on the loss and the delay from the source node to the destination node is:

$$Cost_{max} = \alpha d_{min} \frac{minC}{minD}.$$

$\alpha$ is an adjustable coefficient, $d_{min}$ is a lower bound of the delay constraint, minC is a minimum loss of a path from the source node to the destination node, and minD is minimum delay time of the path from the source node to the destination node.

Setting the value of the loss upper bound of the working path can effectively reduce a search scope.

S63: Determine K paths having loss values less than the value of the loss upper bound in a search space. The search space includes N paths from the source node to the destination node, and K<N.

In the search space including the N paths from the source node to the destination node, if a loss value of a path is greater than or equal to the value of the loss upper bound, the path is removed from the search space. The K paths having the loss values less than the value of the loss upper bound in the search space are finally determined.

S64: Search the K paths to determine M paths that meet the constraint information, where M<K, and K, N, and M are positive integers.

The K paths having the loss values less than the value of the loss upper bound are searched, if a path does not meet the one or more constraint factors in the constraint information, the path is removed from the search space, and the M paths that meet the constraint information are finally determined.

The constraint information includes one or more constraint factors specified by the customer, and one or more rounds of search are performed on a path in the search space based on the one or more constraint factors, a path that does not meet any one of the conditions is removed from the search space, and the M paths that meet the constraint information are finally determined.

S65: Search the M paths to determine a working path and a protection path that meet a requirement. The protection path and the working path meet a characteristic of shared risk path group disjointness.

If the working path that meets the constraint is successfully found in this round of search, the protection path that meets the characteristic of shared risk path group disjointness with the working path continues to be searched for until the working path and the protection path that meet the requirement are determined.

If no working path or protection path that meets the constraint information is found in this round of search, the pre-estimated value of the loss upper bound of the working path is increased, and S63 to S65 are performed again until the working path and the protection path that meet the requirement are determined.

It should be noted that pre-estimation of the value of the path loss upper bound may be inaccurate, and a main function of the pre-estimation is to prune the search space. If the WP that meets the constraint is successfully found in this round of search, an algorithm enters a phase of searching for a PP. Otherwise, in the algorithm, the pre-estimated value of the loss upper bound may be increased by adjusting $\alpha$, and a new round of search starts. The search space is pruned efficiently because the loss upper bound is set, and a very quick search is performed in this phase.

In some feasible implementations, step S63 may be implemented through the following steps S631 and S632.

S631: Traverse the search space in depth first, where the depth-first means that all nodes and edges in one of the N paths are first searched for in a parent-child node order, and then another path is searched for.

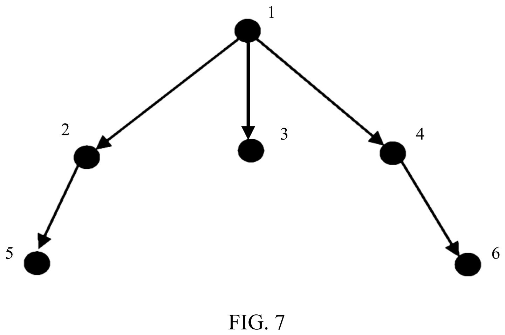

FIG. 7 is a diagram of depth-first search traversal according to an embodiment of this application. The depth-first search traversal is a graph node traversal method. For a network topology shown in FIG. 7, an order of the depth-first search traversal is $1 \rightarrow 2 \rightarrow 5 \rightarrow 3 \rightarrow 4 \rightarrow 6$. A specific process of implementing the depth-first search traversal is described in the following steps S6311 to S6314.

S6311: Start traversal from a source node a next-level node, to obtain one or more child nodes of the source node.

For example, a source node 1 is first searched for, and traversal starts from the source node 1 to a next-level node, to obtain three child nodes 2, 3, and 4 of the source node 1.

S6312: Select one child node from the one or more child nodes, and continue next-level traversal until there is no next-level child node, to determine a path and return to a parent node of the child node.

For example, one of the child nodes 2, 3, and 4 is selected for next-level traversal. For example, the child node 2 is selected for next-level traversal, and a child node 5 is obtained from the child node 2. Next-level traversal is performed from the child node 5, and there is no next-level child node, to determine a first path $1 \rightarrow 2 \rightarrow 5$ and return to the parent node 2 of the node 5. If the node 2 does not have an untraversed child node, the parent node 1 of the node 2 is returned to.

S6313: Sequentially traverse other untraversed child nodes of the parent node, to complete the depth-first search traversal.

For example, if the source node 1 still has two child nodes 3 and 4 that are not traversed, the child node 3 of the node 1 is traversed. After the child node 3 is traversed, a second path $1 \rightarrow 3$ is determined, and the parent node 1 of the child node 3 is returned to. The next-level child node 4 of the node 1 continues to be traversed to obtain a child node 6, to determine a third path $1 \rightarrow 4 \rightarrow 6$. At the end, all paths are traversed, that is, the depth-first search is completed.

S632: During the depth-first search traversal, in synchronization with a traversal depth, accumulate, one by one, loss values of all traversed edges in a current path, and when an accumulated loss value is greater than the value of the loss upper bound $Cost_{max}$, remove the current path from the search space, to obtain the K paths having the loss values less than or equal to the value of the loss upper bound. Specifically, the following steps S6321 to S6323 are included.

S6321: Accumulate, one by one, values of losses $cost_{i-1}$, $cost_{i-2}$, ..., and $cost_{i-j}$ of all edges traversed in a current $i^{th}$ path:

$$Cost_{i-j} = cost_{i-1} + cost_{i-2} + \cdots + cost_{i-j}.$$

For example, the first path $1 \rightarrow 2 \rightarrow 4 \rightarrow 7$ in FIG. 1 is used as an example. There are three edges: $1 \rightarrow 2$, $2 \rightarrow 4$, and $4 \rightarrow 7$. During the depth-first search traversal, the second edge of the first path is traversed, and loss values of the edges $1 \rightarrow 2$ and $2 \rightarrow 4$ are accumulated one by one.

S6322: When the accumulated loss value is greater than the value of the loss upper bound $Cost_{max}$, remove the current path from the search space.

For example, the loss value of $1 \rightarrow 2$ is $cost_{1-1}$, and the loss value of $2 \rightarrow 4$ is $cost_{1-2}$. When the second edge is traversed, the losses are accumulated as $Cost_{1-2} = cost_{1-1} + cost_{1-2}$. If the accumulated value $Cost_{1-2}$ is greater than the value of the loss upper bound $Cost_{max}$, the path $1 \rightarrow 2 \rightarrow 4 \rightarrow 7$ is removed from the search space.

S6323: Continue the depth-first search to traverse one of remaining N-1 paths from the source node to the destination node, perform S6321 and S6322, and finally obtain the K paths having the loss values less than the value of the loss upper bound.

A depth-first search mode is used to traverse graph nodes. This may be very easy for pruning. Pruning is to remove some paths. In this embodiment of this application, when a node is traversed in the depth-first search mode, if a loss or a delay of the path does not meet a specified condition, an entire subtree is removed from the search space, and other child nodes does not need to be explored. In comparison with another graph traversal mode, for example, a breadth-first search and a hierarchical search, the depth-first search requires less storage space.

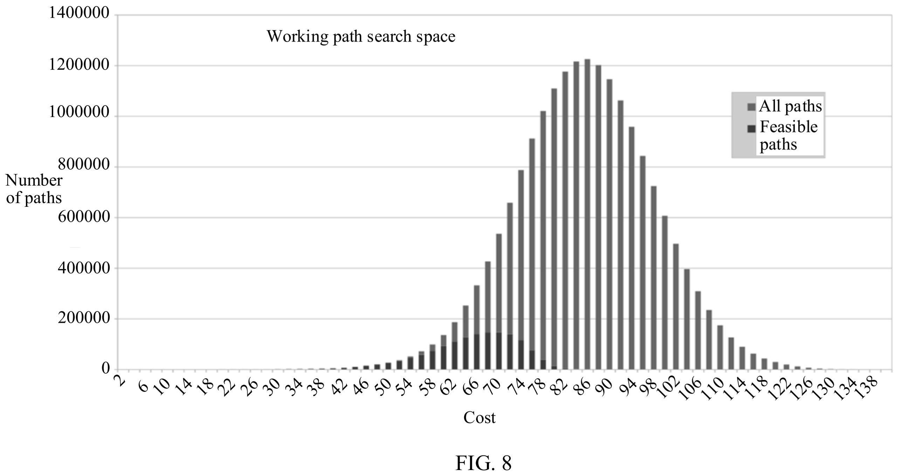

FIG. 8 is a distribution diagram of all path losses in a search space according to an embodiment of this application. As shown in FIG. 8, there are many paths in the entire search space, a value of each light gray column corresponding to a horizontal axis represents a different loss cost, and a height of each light gray column corresponding to a vertical axis represents a number (number) that is of paths from a source node to a destination node and that corresponds to the loss. The loss cost ranges from 0 to 130.

For example, a number of paths with cost values of 71 is appropriately 550,000, and 71 is used as a value of a loss upper bound. After a depth-first search mode is used for searching, paths that need to be searched for and traversed are all paths having loss values less than 71. A search scope is greatly narrowed.

In some feasible implementations, the constraint information in step S64 includes a path delay time range, and the K paths may be searched to determine M paths that meet the delay time range in the constraint information, where M<K, and K, N, and M are positive integers.

A height of a black part in each light gray column corresponding to the vertical axis in FIG. 8 represents a number of paths that meet a delay time range constraint. It can be learned that, in each loss cost, a number of paths that meet the delay time range constraint accounts for only a very small proportion of the number of the paths.

For example, in a path with a cost value of 71, a number of paths that meet the delay time range constraint accounts for only one-third of the number of the paths. During subsequent depth-first search, only the paths represented by black columns, having loss values less than or equal to 71, and meeting the delay time range need to be searched for and traversed. A search traversal scope is further narrowed.

During the depth-first search traversal, in synchronization with the traversal depth, delay time of all edges traversed in the current path may be accumulated one by one, and when the accumulated value of the delay time exceeds a specified delay time range, the current path is removed from the current search space, to obtain M paths that meet the delay time range constraint. Specifically, the following steps S641 to S643 are included.

S641: Accumulate, one by one, values of delay time $t_{i-1}, t_{i-2}, ..., $ and $t_{i-j}$ of all edges traversed in a current $i^{th}$ path:

$$T_{i-j} = t_{i-1} + t_{i-2} + \cdots + t_{i-j}.$$

For example, the first path $1 \rightarrow 2 \rightarrow 4 \rightarrow 7$ in FIG. 1 is used as an example. There are three edges: $1 \rightarrow 2$, $2 \rightarrow 4$, and $4 \rightarrow 7$. Delay time of $1 \rightarrow 2$ is $t_{1-1}$, delay time of $2 \rightarrow 4$ is $t_{1-2}$, and delay time of $4 \rightarrow 7$ is $t_{1-3}$. During the depth-first search traversal, the second edge of the first path is traversed, so that the delay time $t_{1-1}$ of the edge $1 \rightarrow 2$ and the delay time $t_{1-2}$ of $2 \rightarrow 4$ are accumulated one by one.

S642: Remove the current path from the search space when the accumulated value $T_{i-j}$ of delay time exceeds a value of a specified delay time range.

For example, a specified delay time range is 3 ms to 5 ms, a value of $t_{1-1}$ is 2 ms, and a value of $t_{1-2}$ is 4 ms. When the second edge is traversed, the delay time is accumulated $T_{1-2} = t_{1-1} + t_{1-2} = 2 + 4 = 6$, and an accumulated value $T_{1-2}$ of 6 ms is greater than an upper bound value 5 ms of the delay time range, the current path $1 \rightarrow 2 \rightarrow 4 \rightarrow 7$ is removed from the search space.

For another example, the specified delay time range is 3 ms to 5 ms, a value of $t_{1-1}$ is 1 ms, a value of $t_{1-2}$ is 1.5 ms, and a value of $t_{1-3}$ is 0.3 ms. When three edges are traversed, the delay time is accumulated as $T_{1-3} = t_{1-1} + t_{1-2} + t_{1-3} = 1 + 1.5 + 0.3 = 2.8$, and the accumulated value of 2.8 ms is less than a lower bound value 3 ms of the delay time range, and the current path $1 \rightarrow 2 \rightarrow 4 \rightarrow 7$ is removed from the search space.

In an iMaster NCE tunnel path orchestration scenario, a traffic direction needs to be predicted based on different constraints. To meet differentiated service requirements, multi-factor combination constraint paths need to be supported. For a multi-factor combination constraint, one or more rounds of depth-first search traversal may be performed for each constraint factor. For specific steps, adaptive adjustment may be performed with reference to steps S641 and S642 based on a corresponding constraint factor. Details are not described herein again. Each round of depth-first search traversal is performed to prune the search space to gradually narrow the search scope.

Because of efficient pruning of the search space in the foregoing steps, the search scope is narrowed from the initial N paths to the M paths that meet one or more constraints. Therefore, a subsequent phase of searching for the working path and the protection path proceeds very quickly.

If a value of M is 0, that is, no path that meets the constraint information is found in the current round of search, the pre-estimated value of the loss upper bound may be increased, and a new round of search starts.

In some feasible implementations, when the search fails in the K paths, the value of the loss upper bound may be increased. L paths having loss values less than the increased value of the loss upper bound in the search space are determined, and the L paths do not include the K paths. The M paths that meet the constraint information are determined by searching through the L paths.

For example, the loss cost=71 in FIG. 8 is used as the loss upper bound, and the depth-first search mode is used for searching. No path that meets the delay time constraint is found. When the search fails, the value of the loss upper bound may be increased to 73, and L=66,000 paths are added. Steps S63 and S64 are performed again to search through the 66,000 paths, and the M paths that meet the constraint information are determined.

In some feasible implementations, the value of the loss upper bound $Cost_{max}$ may be increased by adjusting $\alpha$, and steps S62 to S64 are performed again.

In some feasible implementations, the working path is a path with a smallest loss in the M paths that meet the one or more constraints.

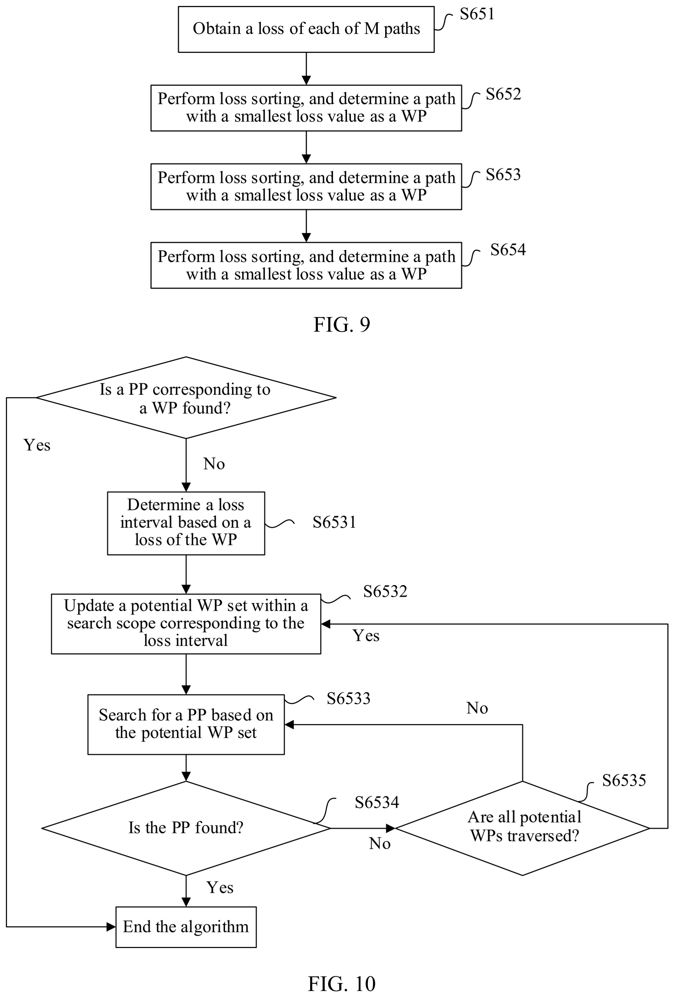

FIG. 9 is a flowchart of determining a working path and a protection path according to an embodiment of this application. As shown in FIG. 9, in step S65, the working path and the protection path may be determined through the following steps S651 to S654.

S651: Obtain a loss $cost_i$ of each of M paths, where i = 1,2, ..., M.

For example, M=4, a loss $cost_i$ of each of the four paths is obtained, and i = 1,2, ...,4. $cost_1$=66, $cost_2$=68, $cost_3$=67, and $cost_4$=65.

S652: Perform loss sorting, and determine that a path with a smallest loss value $cost_i$ is a WP.

For example, the loss values of the foregoing four paths are sorted as follows: $cost_4 < cost_1 < cost_3 < cost_2$, and a path corresponding to a smallest loss value $cost_4$ is determined as the WP.

S653: Search for a PP based on the WP. The PP and the WP meet a characteristic of shared risk path group disjointness. The constraint information is that a delay time difference between the PP and the WP cannot exceed a threshold.

Specifically, all paths where an edge corresponds to one of the paths and is involved in an SRLG corresponding to the WP in the M paths may be pruned based on the optical path topology graph, and the remaining search space is searched for a PP that meets a delay time difference between the PP and the WP not exceeding a threshold constraint.

S654: End the algorithm when the corresponding PP that meets the delay time difference constraint with the WP is found.

There may be a plurality of PPs that meet the delay time difference constraint. To reduce search time and improve efficiency, the algorithm may end when one PP that meets the delay time difference constraint is found through the depth-first search traversal.

To ensure stability and reliability of the communication network, as an alternative, two PPs that meet the delay time difference constraint may be found through the depth-first search traversal.

When one WP is found but a corresponding PP cannot be found, one or more loss intervals may be specified based on a loss of the WP, and a graph structure is traversed in a loss interval to search for a possible WP and PP. When the WP and the PP that meet a requirement cannot be found in the loss interval, a search is performed in a next loss interval. A key parameter for an interval search is step ($\Delta$) selection.

FIG. 10 is a flowchart of determining a protection path based on an interval search according to an embodiment of this application. As shown in FIG. 10, searching for a WP and a PP based on the interval search includes the following steps S6531 to S6535.

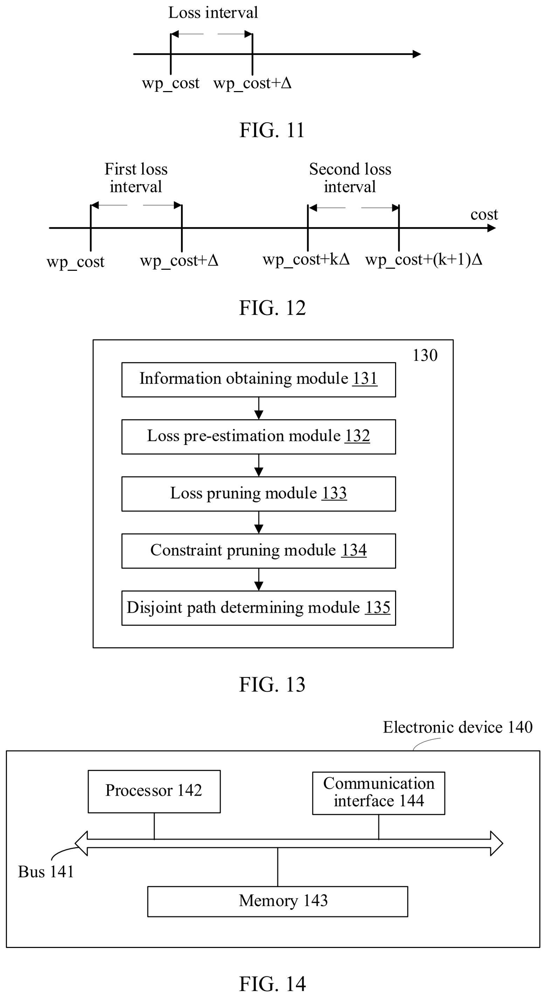

S6531: When one WP is found but a corresponding PP cannot be found, determine a loss interval [wp_cost, wp_cost + $\Delta$] based on a loss wp_cost of the WP. As shown in FIG. 11, $\Delta$ represents a loss step, and a value of wp_cost + $\Delta$ is less than a value of a loss upper bound.

For example, a loss cost=71 is used as the loss upper bound. When one working path WP that meets a delay time constraint is found but a corresponding PP cannot be found, the loss wp_cost of the working path WP is 40, and $\Delta$ may be 10, so that a loss interval [30,40] is determined.

S6532: Update a potential WP set within a search scope corresponding to the loss interval.

For example, as shown in FIG. 8, there are approximately 50 paths that are not searched in a range of the loss interval [30,,40], and the potential WP set is updated to 50 paths in the range of the loss interval [30,,40].

S6533: Search for a PP based on the potential WP set.

For example, based on the 50 paths in the range of the loss interval [30,40], with reference to steps S63 and S64, the 50 paths are traversed based on a depth-first search, to determine the WP that meets constraint information. With reference to steps S651 to S654, a PP that meets a delay time difference constraint is determined.

S6534: Determine whether the PP that meets a requirement is found. If the PP that meets the requirement is found, the algorithm ends. If the PP that meets the constraint is not found, S659 is performed.

S6535: If all potential WPs are traversed, perform S656 again; or if not all potential WPs are traversed, perform S657 again.

Because of a constraint of the loss interval, the search in this phase also proceeds very quickly. When the WP and the PP that meet the requirement cannot be found from paths in a loss interval, the algorithm proceeds to a next interval for searching.

According to the method for solving shared risk path group disjointness provided in embodiments of this application, for complex large-scale networking, for example, typical networking at a scale of 200 nodes and 2,000 paths, a WP and a PP that meet an SRLG disjointness requirement can be found within milliseconds, a loss of the WP is the smallest, the WP meets a delay range constraint, and the WP and the PP meet a delay time difference constraint.

Embodiment 1

Embodiment 1 of this application provides a method for solving shared risk path group disjointness, applied to an automatic network management and control system (iMaster NCE). The automatic network management and control system (iMaster NCE) loads a topology graph from a source node to a destination node and network parameters of the topology graph, to obtain link information of each communication path from the source node and the destination node based on the network parameters of the topology graph. A loss and delay time of an edge in the topology graph structure meet a specific function relationship. The solving method includes the following steps.

S71: Obtain information about a link from a source node to a destination node in a communication network topology. The information about the link includes constraint information and a loss value of each path from the source node to the destination node, and the loss value includes a physical loss and economic costs. The constraint information includes a delay time range specified by a user, and a loss and delay time of an edge in the communication network topology meet a specific function relationship.

S72: Estimate a loss upper bound of a WP based on the function relationship between the loss and the delay time of the edge.

For example, there is a function relationship between a loss C and delay time D of the edge: C = f(D) = KD.

The user-specified delay time range is from 3 ms to 5 ms. The loss upper bound of the WP can be obtained based on the function relationship:

$$\mathrm{Cost_{max}} = \alpha \mathrm{d_{min}}\, \frac{\mathrm{minC}}{\mathrm{minD}} = K\alpha \mathrm{d_{min}} = 3\,K\alpha\,.$$

S73: With reference to the implementations of performing S63 and S64, search the topology for K paths having loss values less than the loss upper bound from the source node to the destination node, and determine M paths that meet the delay time range in the constraint information.

For example, with reference to the implementations of performing S63 and S64, a path with a loss value from the source node to the destination node less than 3 K$\alpha$ is searched for in the topology, to obtain 10 paths, and a path with a delay time range of 3 ms to 5 ms is found from the 10 paths to obtain 5 paths.

S74: With reference to the implementation of performing S65, find a WP and a PP that meet a constraint.

It should be noted that, because the loss and the delay time of the edge in the communication network topology meet the specific function relationship, in an interval search scheme, the WP and the PP that meet an SRLG disjointness constraint can be found by checking only a few intervals.

In some feasible implementations, when one WP is found but a corresponding PP cannot be found, based on a loss wp_cost of the WP, continuous loss intervals are searched, and in a search scope corresponding to the continuous loss intervals, a potential WP set is updated with reference to step S655-59, to find a WP and a PP that meet the SRLG disjointness constraint.

In Embodiment 1, because the loss and the delay time of the edge in the communication network topology meet the specific function relationship, the loss upper bound of the WP can be estimated very accurately. In the interval search scheme, the WP and the PP that meet the SRLG constraint can be found by checking only a few continuous intervals. In this embodiment of this application, an SRLG-disjoint routing problem corresponding to typical networking at a scale of 200 nodes and 2,000 paths can be solved within milliseconds.

Embodiment 2

Embodiment 2 of this application provides a method for solving shared risk path group disjointness, applied to a general communication network topology graph structure. In comparison with Embodiment 1, in the communication network topology graph, a loss and a delay of an edge do not meet a function relationship, and a feasible solution can be obtained only after many adjacent loss intervals are checked in an interval search scheme.

Because there is no clear function relationship between the loss and the delay of the edge in the network topology graph structure, a pre-estimated loss value of a WP is inaccurate. However, the inaccurate pre-estimated loss value of the WP does not greatly affect this application, because the pre-estimated loss value of the WP is used to efficiently prune a search space. Even if the pre-estimated loss value of the WP is inaccurate, the search space can be effectively and efficiently pruned. The value of the loss upper bound of the working path may be estimated with reference to the implementations of performing steps S61 and S62. With reference to the implementations of performing steps S63 to S65, a WP and a PP that have loss values less than the loss upper bound from the source node to the destination node in the topology and meet a delay time range in constraint information are found.

When one WP is found but a corresponding PP cannot be found, for the communication network topology graph structure in Embodiment 2, a search mode of a loss interval search may need to be determined based on a specific graph structure, to find an appropriate search order. For example, if the graph structure is regular, loss intervals are searched in order. If the graph structure is irregular, a jumping loss interval search mode may be used to efficiently solve such a communication network topology.

In some feasible implementations, when one WP is found but a corresponding PP cannot be found, based on a loss wp_cost of the WP, jumping loss intervals may be searched, and in a search scope corresponding to the jumping loss intervals, a potential WP set is updated with reference to step S655-59, to find a WP and a PP that meet an SRLG disjointness constraint.

When one WP is found but a corresponding PP cannot be found, a first loss interval may be first set based on a loss wp_cost of the WP to search through the first loss interval. If a WP and a PP that meet the SRLG disjointness constraint still cannot be found, a second loss interval is set at a specific interval for searching. This can be deduced by analogy, until a WP and a PP that meet the SRLG disjointness constraint are found. $k\Delta$ is an interval between the first loss interval and the second loss interval.

For example, as shown in FIG. 12, the first loss interval is [wp_cost, wp_cost + $\Delta$]. If the WP and the PP that meet the SRLG disjointness constraint still cannot be found, the second loss interval [wp_cost + $k\Delta$, wp_cost + (k + 1)$\Delta$] is set at an interval.

It may be understood that the interval between the first loss interval and the second loss interval may be adjusted, and may be a multiple of the loss step $\Delta$, or may be any value. If the WP and the PP that meet the SRLG disjointness constraint cannot be found at a large interval, an interval between the second loss interval and a third loss interval may be reduced before a next round of search.

In some feasible implementations, the interval between the first loss interval and the second loss interval may be any value.

In Embodiment 2, in this embodiment of this application, a search mode of interval search needs to be first determined based on a specific graph structure, to find an appropriate search order. This part may be completed in a preprocessing phase, and real-time problem-solving time is not affected. After an appropriate preprocessing step is completed, in this embodiment of this application, an SRLG-disjoint routing problem corresponding to typical networking at a scale of 200 nodes and 2,000 paths can be solved within milliseconds.

FIG. 13 is a diagram of an apparatus for solving shared risk path group disjointness according to an embodiment of this application. As shown in FIG. 13, the apparatus 130 includes: an information obtaining module 131, configured to obtain information about a link from a source node to a destination node in a communication network topology, where the information about the link includes constraint information and a loss value of each path from the source node to the destination node, the loss value includes a physical loss and economic costs, and the constraint information includes one or more specified constraint factors; a loss pre-estimation module 132, configured to estimate a value of a loss upper bound of a working path; a loss pruning module 133, configured to determine K paths having loss values less than the value of the loss upper bound in a search space, where the search space includes N paths from the source node to the destination node, and K<N; a constraint pruning module 134, configured to search through K paths to determine M paths that meet the constraint information, where M<K, and K, N, and M are positive integers; and a disjoint path determining module 135, configured to search the M paths to determine a working path and a protection path that meet a requirement, where the protection path and the working path meet a characteristic of shared risk path group disjointness.

The modules are used as examples of software functional units, and the apparatus for solving shared risk path group disjointness may include code that is run on a computing instance. The computing instance may be at least one of computing devices such as a physical host (computing device), a virtual machine, and a container.

The modules are used as examples of hardware functional units, and the apparatus for solving shared risk path group disjointness may include at least one computing device, for example, a server. Alternatively, the apparatus for solving shared risk path group disjointness may be a device implemented by using an ASIC, a PLD, or the like. The PLD may be a CPLD, an FPGA, GAL, or any combination thereof.

FIG. 14 is a diagram of an electronic device according to an embodiment of this application. As shown in FIG. 14, the electronic device 140 includes a bus 141, a processor 142, a memory 143, and a communication interface 144. The processor 143, the memory 142, and the communication interface 144 communicate with each other through the bus 141. The electronic device 140 may be a server or a terminal device. It should be understood that quantities of processors and memories in the electronic device 140 are not limited in this application.

The bus 141 may be a peripheral component interconnect (peripheral component interconnect, PCI) bus, an extended industry standard architecture (extended industry standard architecture, EISA) bus, or the like. Buses may be classified into an address bus, a data bus, a control bus, and the like. For ease of representation, only one line is used for representation in FIG. 14, but this does not mean that there is only one bus or only one type of bus. The bus 141 may include a path for information transmission between components (for example, the memory 141, the processor 142, and the communication interface 143) of the electronic device 140.

The processor 142 may include any one or more of processors, for example, a central processing unit (central processing unit, CPU), a graphics processing unit (graphics processing unit, GPU), a microprocessor (microprocessor, MP), or a digital signal processor (digital signal processor, DSP).

The memory 143 may include a volatile memory (volatile memory), for example, a random access memory (random access memory, RAM). The memory 143 may further include a non-volatile memory (non-volatile memory), for example, a read-only memory (read-only memory, ROM), a flash memory, a hard disk drive (hard disk drive, HDD), or a solid state drive (solid state drive, SSD).

The memory 143 stores executable program code, and the memory 143 executes the executable program code to implement the method for solving shared risk path group disjointness. In other words, the memory 143 stores instructions used to perform the method for solving shared risk path group disjointness.

The communication interface 144 uses a transceiver module, for example, but not limited to, a network interface card or a transceiver, to implement communication between the electronic device 140 and another device or a communication network.

An embodiment of this application provides a computer storage medium. The computer storage medium stores instructions. When the instructions are run on a computer, the computer is enabled to perform the method according to any one of the foregoing implementations.

Finally, it should be noted that the foregoing embodiments are merely intended for describing the technical solutions of the present invention, but not for limiting the present invention. Although the present invention is described in detail with reference to the foregoing embodiments, a person of ordinary skill in the art should understand that modifications may still be made to the technical solutions described in the foregoing embodiments or equivalent replacements may be made to some technical features thereof. Such modifications or equivalent replacements do not cause corresponding technical solutions to depart from the protection scope of the technical solutions in embodiments of the present invention.

**Claims**

1. A method for solving shared risk path group disjointness, wherein the method comprises:

   obtaining information about a link from a source node to a destination node in a communication network topology, wherein the information about the link comprises constraint information and a loss value of each path from the source node to the destination node, the loss information comprises a physical loss and economic costs, and the constraint information comprises one or more specified constraint factors;
   estimating a value of a loss upper bound of a working path;
   determining K paths having loss values less than the value of the loss upper bound in a search space, wherein the search space comprises N paths from the source node to the destination node, and K<N;
   searching the K paths to determine M paths that meet the constraint information, wherein M<K, and K, N, and M are positive integers; and
   searching the M paths to determine a working path and a protection path that meet a requirement, wherein the protection path and the working path meet a characteristic of shared risk path group disjointness.

2. The method according to claim 1, wherein the search space is traversed in depth first, and the depth first means that all nodes and edges in one of the N paths are first searched for in a parent-child node order, and then another path is searched for.

3. The method according to claim 1 or 2, wherein determining the K paths having the loss values less than the value of the loss upper bound in the search space comprises:

   traversing the N paths from the source node to the destination node; and
   during traversal, accumulating, one by one, loss values of all edges in a current path, and when an accumulated value is greater than the value of the loss upper bound, removing the current path from the search space, to obtain the K paths having the loss values less than or equal to the value of the loss upper bound.

4. The method according to any one of claims 1 to 3, wherein searching the K paths to determine the working path that meets one or more constraints comprises:

   increasing the value of the loss upper bound when the working path that meets the one or more constraints fails to be found from the K paths;
   determining L paths having loss values less than or equal to an increased value of the loss upper bound in the search space, wherein the L paths do not comprise the K paths; and
   searching the L paths to determine the working path that meets the one or more constraints.

5. The method according to any one of claims 1 to 4, wherein estimating the value of the loss upper bound $Cost_{max}$ comprises:

   calculating the value of the loss upper bound $Cost_{max}$ by using the following formula:

$$\text{Cost}_{\max} = \alpha d_{\min} \frac{\text{minC}}{\text{minD}}$$

wherein $\alpha$ is an adjustable coefficient, $d_{\min}$ is a lower bound of a delay constraint, minC is a path with a minimum loss from the source node to the destination node, and minD is a path with minimum delay time from the source node to the destination node.

6. The method according to claim 5, wherein the value of the loss upper bound is increased by increasing a value of the adjustable coefficient $\alpha$.

7. The method according to any one of claims 1 to 6, wherein the one or more constraints comprise a path delay time range constraint.

8. The method according to any one of claims 1 to 7, wherein the working path is a path with a smallest loss in a plurality of paths that meet the one or more constraints.

9. The method according to any one of claims 1 to 8, wherein searching the M paths to determine the working path and the protection path that meet the requirement comprises:
   removing, from the M paths, a path to which all edges that correspond and that are involved in an SRLG group corresponding to the WP, and searching a remaining search space for the protection path that meets the constraint.

10. The method according to any one of claims 1 to 8, wherein searching the M paths to determine the working path and the protection path that meet the requirement comprises:

    when one working path is found but a corresponding protection path cannot be found, determining one or more continuous loss intervals based on a loss of the working path; and determining, based on search in a search space corresponding to the one or more continuous loss intervals, the working path and the protection path that meet the requirement.

11. The method according to claim 10, wherein searching the M paths to determine the working path and the protection path that meet the requirement comprises:

    when one working path is found but a corresponding protection path cannot be found, determining one or more spaced loss intervals based on a loss of the working path; and determining, based on search in a search space corresponding to the one or more spaced loss intervals, the working path and the protection path that meet the requirement.

12. The method according to any one of claims 1 to 11, wherein the protection path and the working path meet a disjoint constraint of a delay time difference.

13. An electronic device, wherein at least one memory is configured to store a program; and at least one processor is configured to execute the program stored in the memory, and when the program stored in the memory is executed, the processor is configured to perform the method according to any one of claims 1 to 12.

14. A computer storage medium, wherein the computer storage medium stores instructions, and when the instructions are run on a computer, the computer is enabled to perform the method according to any one of claims 1 to 12.

FIG. 1

FIG. 2

FIG. 3

Start

Load a graph, initialize a set of risky edges, and initialize a penalty weight — S401

Search for a WP — S402

Update the set of risky edges — S403

Update the penalty weight — S404

S405 — Is a PP that meets a constraint found?

No → (back to Update the penalty weight)

Yes ↓

S406 — Do the WP and the PP meet SRLG disjointness?

No → Determine a most risky edge based on the WP and the PP → (back to Update the set of risky edges)

Yes ↓

End

**FIG. 4**

Network topology architecture 51 → Dynamically collect network parameters

Customer requirement 52 → SRLG-disjoint path

Dynamically collect network parameters → SRLG-disjoint path → Planned path 53

**FIG. 5**

Obtain information about a link from a source node to a destination node    S61

↓

Estimate a value of a loss upper bound of a WP    S62

↓

Determine K paths having loss values less than the value of the loss upper bound in a search space    S63

↓

Search the K paths to determine M paths that meet constraint information    S64

↓

Search the M paths to determine a WP and a PP    S65

↓

Find a WP that meets a constraint

— No → Increase the estimated value of the loss upper bound of the WP

↓ Yes

Search for a PP that meets a characteristic of disjointness with the WP

↓

Succeed and return

FIG. 6

FIG. 7

FIG. 8

Obtain a loss of each of M paths — S651

Perform loss sorting, and determine a path with a smallest loss value as a WP — S652

Perform loss sorting, and determine a path with a smallest loss value as a WP — S653

Perform loss sorting, and determine a path with a smallest loss value as a WP — S654

FIG. 9

Is a PP corresponding to a WP found?

Yes

No

Determine a loss interval based on a loss of the WP — S6531

Update a potential WP set within a search scope corresponding to the loss interval — S6532

Yes

Search for a PP based on the potential WP set — S6533

No

Is the PP found? — S6534

No

Are all potential WPs traversed? — S6535

Yes

End the algorithm

FIG. 10

Loss interval

wp_cost  wp_cost+Δ

FIG. 11

First loss
interval

Second loss
interval

cost

wp_cost    wp_cost+Δ    wp_cost+kΔ    wp_cost+(k+1)Δ

FIG. 12

130

| Information obtaining module 131 |
| Loss pre-estimation module 132 |
| Loss pruning module 133 |
| Constraint pruning module 134 |
| Disjoint path determining module 135 |

FIG. 13

Electronic device 140

| Processor 142 | | Communication interface 144 |

Bus 141

| Memory 143 |

FIG. 14

## INTERNATIONAL SEARCH REPORT

| International application No. |
| --- |
| **PCT/CN2024/076050** |

**A.  CLASSIFICATION OF SUBJECT MATTER**

H04L 45/02(2022.01)i

According to International Patent Classification (IPC) or to both national classification and IPC

**B.  FIELDS SEARCHED**

Minimum documentation searched (classification system followed by classification symbols)

IPC：H04L

Documentation searched other than minimum documentation to the extent that such documents are included in the fields searched

Electronic data base consulted during the international search (name of data base and, where practicable, search terms used)

CJFD, CNTXT, ENTXT, DWPI: 共享风险路径组, 网络, 路径, 分离路径, 保护, 时延, 损失, 成本, 约束, shared risk link group, SRLG, topology, path, protect, delay, cost

**C.  DOCUMENTS CONSIDERED TO BE RELEVANT**

| Category* | Citation of document, with indication, where appropriate, of the relevant passages | Relevant to claim No. |
| --- | --- | --- |
| X | 张品 等 (ZHANG, Pin et al.). "QoS约束下的链路分离路径问题研究 (Researches on The Problem of Link Disjoint Paths Pair with Qos Constraints)" 通信学报 (*Journal on Communications*), 30 June 2006 (2006-06-30), sections 1-3 | 1-14 |
| A | CN 109995650 A (ZTE CORP.) 09 July 2019 (2019-07-09) entire document | 1-14 |
| A | CN 102325088 A (BEIHANG UNIVERSITY) 18 January 2012 (2012-01-18) entire document | 1-14 |
| A | US 2005237950 A1 (BOARD OF REGENTS, THE UNIVERSITY OF TEXAS SYSTEM) 27 October 2005 (2005-10-27) entire document | 1-14 |
| A | 刘静 等 (LIU, Jing et al.). "链路分离路径算法研究 (Study of the Algorithms for Link Disjoint Paths)" 舰船电子工程 (*Ship Electronic Engineering*), 30 April 2014 (2014-04-30), entire document | 1-14 |

☐ Further documents are listed in the continuation of Box C.      ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **06 May 2024** | **10 May 2024** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/076050**

| Patent document cited in search report | | | Publication date (day/month/year) | Patent family member(s) | | | Publication date (day/month/year) |
|---|---|---|---|---|---|---|---|
| CN | 109995650 | A | 09 July 2019 | EP | 3720064 | A1 | 07 October 2020 |
| | | | | WO | 2019134483 | A1 | 11 July 2019 |
| CN | 102325088 | A | 18 January 2012 | None | | | |
| US | 2005237950 | A1 | 27 October 2005 | None | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310184975